# EUROPEAN PATENT APPLICATION

(11) **EP 2 835 575 A2**
(43) Date of publication of application: **11.02.2015**
(21) Application number: 14179612.8
(22) Date of filing: 02.08.2014
(51) Int. Cl.: F21S 8/10, F21V 8/00

(54) **A total internal reflection featured optical element**

(30) Priority: 06.08.2013 TR 201309543
(71) Applicant: Farba Otomotiv Aydinlatma ve Plastik Fabrikalari Anonim Sirketi, 16140 Bursa (TR)
(72) Inventor: Alay, Ahmet, 16140 BURSA (TR); Özaydin, Mustafa Çaglar, 16140 BURSA (TR); Isik, Mesut, 16140 BURSA (TR)
(74) Representative: Iskender, Ibrahim

(57) **Abstract**

The invention is related to a TIR optical element (100) based on total internal reflection with surfaces having different and independent forms from each other ensuring both rays coming from a light source (200) focusing on a specified spot and dispersing to a general environment, and ensuring to obtain desired result within determined geometrical limitations when any change is necessary in the optical design in order to utilize in vehicle headlights and especially in daytime running lamps.

## Description

### TECHNICAL FIELD

The invention is related to an optical element with different form surfaces ensuring rays coming from a light source to focus on a specified spot and dispersing to a general environment in order to utilize in vehicle headlights and especially in daytime running lamps.

### PRIOR ART

Daytime Running Lamps (DRL) are security and lighting equipments and positioned as separate units in headlights or on bumpers. They are turned on when the ignition is switched on in order to ensure the vehicle in oncoming traffic to be noticed under any weather conditions during daytime.

Daytime running lights have been generally designed in the form to include a chamber, a PCB positioned in the said chamber and linked with a light source, TIR optical element having surfaces to ensure directing the light exiting from the said light source and mechanisms including an outer lens assembly enclosing the chamber.

TIR optical elements are translucent elements used in order to ensure routing the lights coming from the light source in the specified form by surrounding the light source. TIR optical elements contain different shaped surfaces to ensure reflecting lights and directing by refracting.

Registration under patent number US 7270452 B2 mentions a vehicle light of the said structure. The translucent element located in the said vehicle lamp consists of a direct beams control area and a refracting beams control area. Direct beams control area ensures refracting and routing rays coming from the light source with small angles and the refracting beams control area ensures refracting and routing rays coming from the light source with large angles.

Reflected ray control area contains convex shaped surfaces ensuring routing rays reflected from its lateral surfaces by refracting. These said surfaces are uniform structures configured in a form to embrace a 360 degree space within the translucent element. Anyhow, the direct ray control area has been configured in a form to reveal a homogenous convex form.

Another similar configuration has been disclosed in the patent registry number US 6755556 B2. The optical element described in the said application is a homogenous structure obtained by turning concave form surfaces by 360 degrees within the structure ensuring routing rays by refraction.

As noted above surfaces refracting and routing rays in the existing TIR optical elements have been obtained by turning by 360 degrees within the structure and designed as a whole in spherical and prism-like forms. This condition results that these surfaces are structures working commonly with each other. So performing any change on any surface is not possible regardless from the other surfaces. For example, in the event that any determined conditions of a change or optical design to be done on the optical system could not be met all the structure must be reconfigured from the starting spot. In this case the necessity of conducting changes in predetermined geometrical limitations or the prism coefficient of the structure occurs.

In order to ensure rays trafficking in any structures with refractive index greater than refractive index of the air pass again into the air they are required arriving refractive surfaces below a certain angle. As in TIR optical elements, angles of rays coming from the light source with lateral refractive surfaces are greater than this limit angle rays cannot go away from the structure progress in their way. Rays arriving surfaces looking toward the center axis of the structure become exposed to routing according to the structure of these surfaces. By angularly acting on the spherical radii of these surfaces the area to be scanned angularly is being determined. Spherical surfaces with concave or convex form are optical structures sending rays coming by diffusing. Focusing and routing the ray to a determined area through spherical surfaces have been realized in a limited form. Another disadvantage of TIR optical elements specified under patents number US 7270452 B2 and US 6755556 B2 is this limitation caused by spherical surfaces.

After all, the above-mentioned problems have obliged to realize a change in the relevant technical field.

### BRIEF DESCRIPTION OF THE INVENTION

The present invention is related to a TIR optical element developed in order to eliminate above-mentioned disadvantages from and bring new advantages to the relevant technical field.

The main object of the invention is to reveal a TIR optical element ensuring to make optical design without making any change in the prism coefficient and but remaining limitations regarding the light source, number of light sources and the geometry when performing a change in the optical system

Another objective of the invention is to reveal a TIR optical element ensuring both focusing the lights coming from the lights source through independent and surfaces of different forms as well distributing to a media.

The present invention, in order to realize all objectives mentioned above and to reveal from the following detailed description, relates to a central refractive surface meeting rays emitting from the light source by surrounding such light source from the bottom part and a lateral refractive surface surrounding the mentioned central refractive surface; a central ray controlling area meeting and distributing rays coming from the mentioned central refractive surface; a reflective surface meeting rays coming from lateral ray controlling area and functioning in accordance with full inner reflection principle, and an optical element ensuring sending rays coming from the said reflective surface to a certain area with spherical shaped surfaces containing a lateral ray controlling area surrounding the mentioned central ray controlling area. Characteristics of the said optical element include,
- A free form the surface of the said central ray control area, to ensure distribution in different directions, of rays coming from the central refractive surface and that do not contain a certain spherical form,
- Minimum one prism type surface of the mentioned lateral ray controlling area, ensuring rays coming from the mentioned reflective surface to focus on a certain spot.

In order to configure the present invention and being able to understand its advantages with additional elements, they must be evaluated with figures described below.

### BRIEF DESCRIPTION OF FIGURES

Figure 1 is the overall view of the TIR optical element according to the invention.
Figure 2, is a perspective view of the TIR optical element according to the invention together with the light source.
Figure 3, is the sectional view of the TIR optical element according to the invention.
Figure 4, is a perspective view of the TIR optical element according to the invention from above.
Figure 5, is a sectional view of TIR optical element according to the invention taken alongside A-A' line and indicating direction of the ray.
Figure 6, is a sectional view of TIR optical element according to the invention taken alongside B-B' line and indicating direction of the ray.

### REFERENCE NUMBERS

100 TIR Optical Element
   10 Central Ray Control Area
      11 Freeform Surface
         11' Surface A
         11" Surface B
   20 Lateral Ray Control Area
      21 Reflective Surface
      22 Prism Type Surface
         221 Step
      23 Spherical Form Surface
         231 Step
   30 Central Refractive Surface
   40 Lateral Refractive Surface
200 Light Source
300 Connection Plate

### DETAILED DESCRIPTION OF THE INVENTION

In this detailed description the TIR optical element (100) according to the invention has been illustrated by examples in a way not to have any limiting effect towards better understanding the subject.

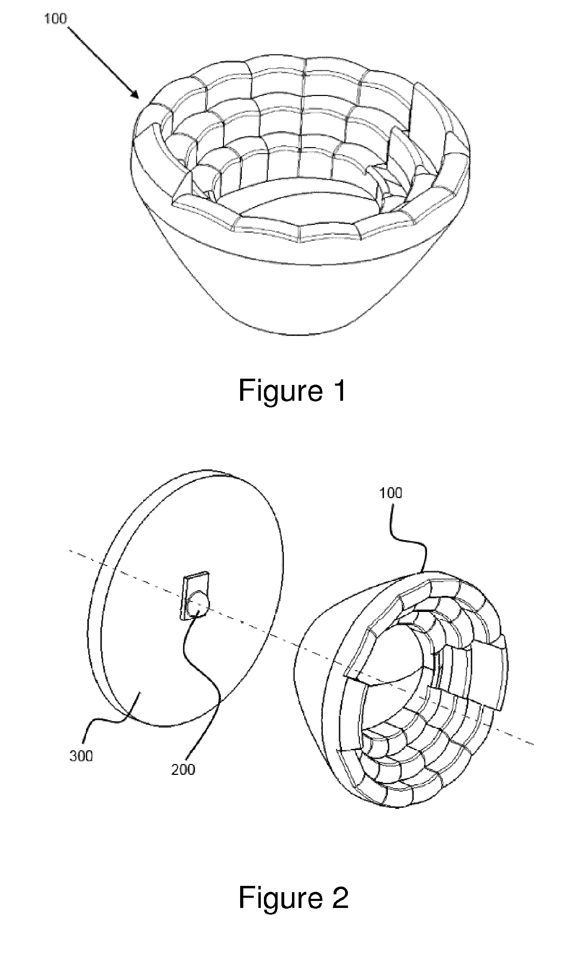

Figure 1, the overall view of the TIR optical element according to the invention. The mentioned TIR optical element (100) has been positioned on the connection plate (300) as it is seen in the Figure 2 and surrounds a light source (200) connected on the mentioned connection plate (300). The connection plate (300) ensures connection with the mentioned light source (200) with a power source.

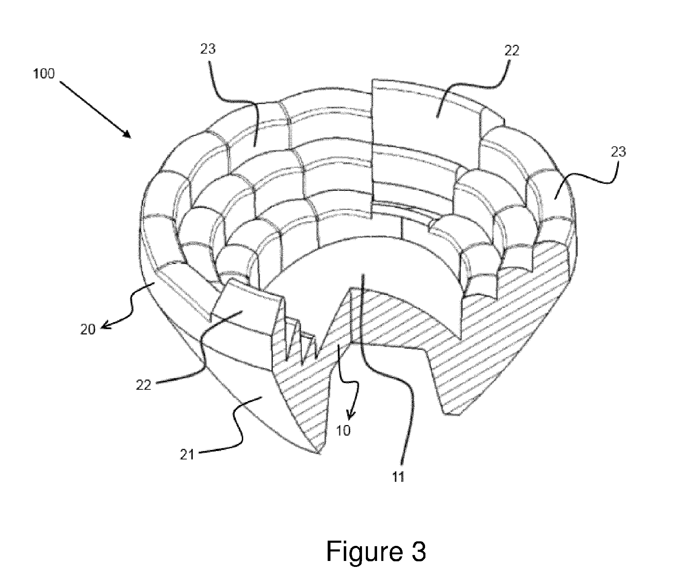

Figure 3 is the sectional view of the inventive TIR optical element. As seen in the said figure, TIR optical element (100) comprises surfaces structured in different forms. The mentioned surfaces have been configured on a central control area (10) positioned at the center of TIR optical element (100) and a lateral ray control area (20) surrounding said central ray control area (10).

Central ray control area (10) comprises a freeform surface (11). The mentioned freeform surface (11) is generally in convex form, this form does not contain a certain spherical form i.e. a curvature radius. The interior part of lateral ray control area (20) has prism form surfaces (22) and spherical form surfaces (23) surrounding freeform surfaces (11) and structured in the form of steps (221, 231). A reflective surface (21) defines exterior face surrounding interior surface of the ray control area.

An indent has been provided so as to surround the light source (200) at the bottom of TIR optical element (100). The mentioned indent comprises a central refractive surface (30) and a lateral refractive surfaces (40) surrounding the mentioned refractive surface (30).

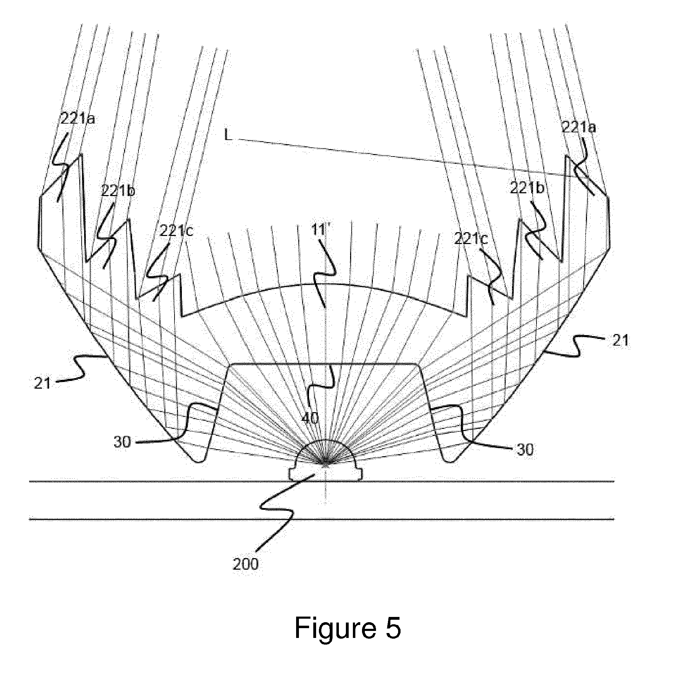

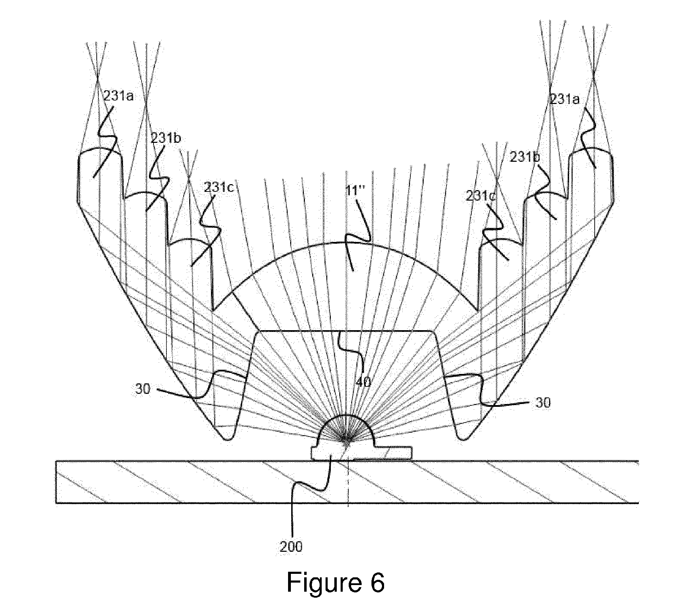

Figure 5, is a sectional view along the A-A' line between prism type surfaces (22) of TIR optical element subject to the invention. The surface of freeform surface (11) continuing along this line has been defined as surface A (11'). Figure 6 indicates a sectional view taken between spherical form surfaces (23) of TIR optical element (100) in between B-B' line. As for the surface of the freeform surface (11) continuing along this line has been defined as surface B (11 "). For preferred embodiment of the invention surface A (11') of the optical element (100) has been positioned to be parallel to ground axis (axis A) and surface B (11") will be perpendicular to the ground axis (axis B). I.e. surface A (11') has made an angle only at the horizontal axis (axis A) with the light source (200), surface B (11") has made an angle only at vertical axis (axis B) with surface B. Consequently while surface A (11') emits the light on the horizontal axis (axis A), on the other hand axis B (11") emits the light on the vertical axis (axis B).

As to be understood from Figure 5 and Figure 6 indicating freeform surface (11) from different sections, surface B (11") revealed by free surface along with B-B' line is at a more curvilinear structure compared to surface A (11') revealed along with A-A' line. This configuration of A and surface B is the indication that the freeform surface (11) has not a full spherical form, i.e. that do not comprise a definite curvature radius but different curvature radii at each and every spot.

The small angle rays coming from the light source (200) hit the central refractive surface (30) and reach to the freeform surface (11) by refraction in accordance with Snell law. Freeform surface (11) refracts rays coming from the central refractive surface (30) and distributes in horizontal and vertical directions. And the rays emitting from the light source (200) with greater angles hit lateral refractive surfaces (40) and reach to reflective surfaces (21) after refraction. Refractory index of TIR optical element (100) is greater than the refractory index of the air. Therefore in order to ensure rays coming from the lateral refractive surface (40) emanate from the structure, the angle they make with the reflective surface (21) must be higher than a certain limit value. However, due to the structure of the optical element (100) the incidence angle of rays hitting the surface (21) is greater than the mentioned the limit angle. Consequently rays hitting the reflective surface (21) cannot emanate from the optical element (100) and total internal reflection (TIR) occurs. Rays reflected by reflective surface (21) hit on the prism type surfaces (22) looking at the center and spherical form surfaces (23).

Prism type surfaces (22) serve to focus the light to a specified spot. And, spherical form surfaces (23) serve to send the light to a certain area by spreading.

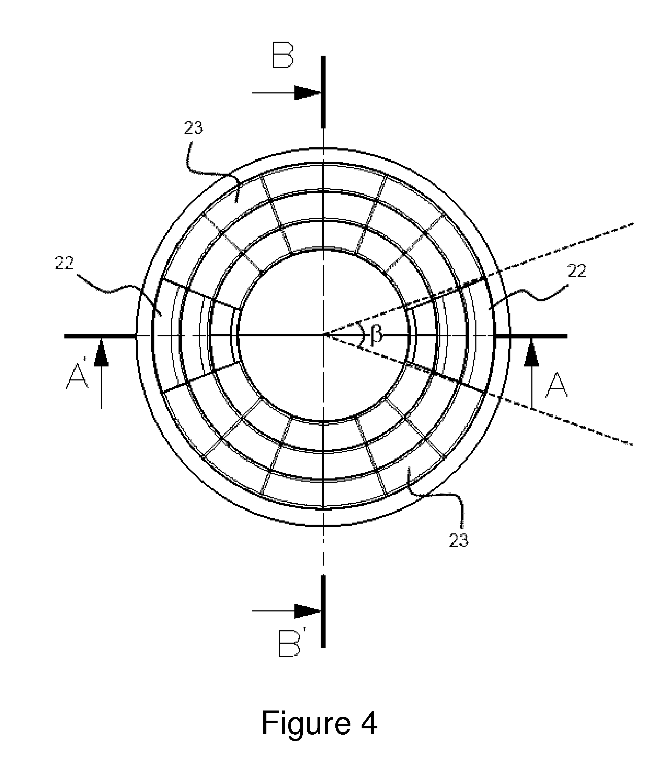

With reference to Figure 5, small angle rays emitting from the light source (200) reach to the central refractive surface (30) and hit on the free form surface (11) after refraction. And the freeform surface (11') ensures distribution of coming rays in a lateral plan. For the preferred embodiment of the invention, the freeform surface (11') conducted in a way that the coming rays to scan an area in the range of (-10°, +10°) horizontally. And the larger rays emitting from the light source (200) reflect from reflective surfaces (21) and route to the prism type surfaces (22). Such prism type surfaces (22) refract rays and focus to a specified area. The first and second steps (221 a and 221 b) and the third step (221 c) of the prism type surfaces (21) are configured to focus the light to different angles. For the preferred embodiment of the invention while the first and second steps (221 a and 221 b) focus the light to +20°, the third steps (221 c) focus the light to the (+10°) range. The first step (221 a) serves additionally to focus the ray indicated with L to 80° as a result of full internal reflection. Figure 4 is the perspective view from above of the TIR optical element (100). The area occupied by prism type surfaces (22) in the structure are defined by the central angle (β). According to the requirement of the design central angles (β) of prism type surfaces in the structure may be adjusted symmetrically or asymmetrically and in a way that each and every prism type surface (22) will have a central angle (β) with a different value. In line with this, number of prism type surfaces (22) in the structure may be changed.

Small angle rays emitting from the light source (200) with reference to Figure 6 reach to the central refractive surface (30) and hit freeform surface (11") after refraction. The freeform surface (11 ") serves to distribute coming rays in a vertical plan. For the preferred embodiment of the invention, the freeform surface (11 ") is structured in a way that the coming rays to scan an area in the range of (-20°, +20°) horizontally. Larger rays emitting from the light source (200) reflect from reflective surfaces (21) and are routed to spherical surfaces (23). Spherical form surfaces (23) serve distribution of rays along with a determined area. For the preferred embodiment of the invention, while the first and second steps (231 a and 231 b) emit the light into (+20°, -20°) range, the third steps (231c) send to (+10°, -10°) range. By acting on diameters of spherical surfaces orientation and intensity of the light can be adjusted.

The TIR optical element (100) according to the invention, thanks to different form surfaces comprised, reveals a structure able to meet different optical design requirements. In more detailed words, freeform surface (11), prism type surfaces (22) and spherical form surfaces (23) contained may act independent from each other and any of the said surfaces may be intervened depending on requirements of the design. For example if the change required to be done relates to distributing the light to a certain area by intervening only with the spherical radii of spherical form surfaces (23) the amount of angle to be scanned by the light may be determined. If the change required to be done is to focus the light to a certain spot, it will be possible to focus rays onto the relevant spot by changing the central angle (β) of prism type surfaces (22). For example, any spots where geometrically visible light cannot be sent may be illuminated in this way. Central angles (β) of prism type surfaces (22) are increased in cases where a dominating focusing is needed.

Different form surfaces of TIR optical element (100) using the same parameters (refractive surface, the light source etc) has ensured to reveal a TIR optical element (100) optically controllable in maximum level but remaining in geometrical limitations and parameters.

Exclusion of a certain spherical form by the freeform surface (11) in the central ray control area (10) of the TIR optical element (100), indication of changes in surfaces in lateral ray control area as the prism type surfaces (22) and spherical form surfaces prevents obtaining by revolving the structure 360° as a whole.

## Claims

1. An optical element (100) having;
- a central refractive surface (30) meeting rays emitting from the light source (200) by surrounding a light source (200) and a lateral refractive surface (30) surrounding the mentioned central refractive surface (30);
- a central ray control area (10) meeting and distributing rays coming from the mentioned central refractive surface (30);
- a reflective surface running according to a full internal reflection system by meeting rays arriving from the said lateral refractive surface (40) and surrounding the said central control area and ensuring emitting rays coming from the said reflective surface (21), a lateral ray controlling area (20) having spherical form surfaces (23) in stepped structure (231)
and **characterized in that**;
- said central ray control area (10) comprises a freeform surface (11) ensuring distribution of rays coming from the central refractive surface (30) in different orientations and that do not contain a certain curvature radius,
- said lateral ray control area (20) comprises a minimum one prism type surface (22) ensuring to focus rays coming from the mentioned reflective surface (21).

2. An optical element according to the Claim 1, **characterized in that** said freeform surface (11) comprises a surface A (11') configured in a way to reveal a convex form that do not comprise any spherical feature and a surface B (11") having a more curved form from the surface A (11').

3. An optical element (100) according to the Claim 2, **characterized in** emitting the light in the horizontal axis by positioning the space A (11') parallel to the light source (200) and in the vertical axis by positioning the space B (11") perpendicular to the light source (200).

4. An optical element (100) according to the Claim 1, **characterized in that** said prism type surface (22) comprises a stepped (221) structure.

5. An optical element (100) according to the Claim 4, **characterized in that** said steps (221) have different surface angles in the form to focus rays to a different spot.

6. An optical element (100) according to Claim 1 or Claim 4, **characterized in that** the number of prism type surface (22) inside and the area covered by these surfaces (22) are variable depending on the spot where the light is desired to be focused.

7. An optical element (100) according to Claim 1, **characterized in that** said freeform surface (11), spherical form surface (22) and prism type surface (23) structures have been designed in the form to meet requirements of the optical design.
